# FASCICULE DE BREVET EUROPEEN

(11) **EP 3 162 523 B1**
(45) Date de publication et mention de la délivrance du brevet: **05.09.2018**
(21) Numéro de dépôt: 16195563.8
(22) Date de dépôt: 25.10.2016
(51) Int. Cl.: B29C 33/48, B29C 70/32

(54) **MANDRIN MÉTALLIQUE CREUX DÉMONTABLE POUR LE BOBINAGE D'UNE CAPACITÉ COMPOSITE, TELLE QU'UN RÉSERVOIR DE PROPULSEUR À POUDRE D'UNE FUSÉE**
ABNEHMBARER HOHLER METALLDORN FÜR DIE WICKLUNG EINER VERBUNDKAPAZITÄT, WIE DER BEHÄLTER EINES PULVERANTRIEBS EINER RAKETE
REMOVABLE HOLLOW METAL MANDREL FOR WINDING A COMPOSITE CAPACITY, SUCH AS A POWDER PROPELLANT TANK OF A ROCKET

(30) Priorité: 30.10.2015 FR 1502299
(43) Date de publication de la demande: 03.05.2017
(73) Titulaire: Constructions Industrielles de la Méditerranée - CNIM, 75008 Paris (FR)
(72) Inventeur: DUMONT, Didier, 83200 TOULON (FR); LE TALBODEC, Vincent, 83140 SIX FOURS LES PLAGES (FR); BLANCHARD, Benjamin, 83500 LA SEYNE SUR MER (FR); VALIBOUSE, Pierre, 13400 AUBAGNE (FR)
(74) Mandataire: Thinat, Michel

(56) Documents cités:
- US-A- 5 266 137
- US-A1- 2012 319 324

## Description

La présente invention concerne un mandrin métallique creux pour le bobinage d'une capacité composite telle qu'un réservoir de propulseur à poudre d'une fusée.

Le mandrin de bobinage est l'outillage principal pour la réalisation de capacités ou structures tubulaires fermées ou ouvertes, notamment des récipients composites renforcés de fibres ayant une résistance et une rigidité élevées, tels que des réservoirs de propulseurs de fusées.

De tels réservoirs comprennent une partie cylindrique et deux fonds avant et arrière comportant deux ouvertures appelées chacune « ouverture polaire », et pouvant être reliées à d'autres pièces telles qu'un bouchon allumeur à l'avant et une tuyère à l'arrière.

La réalisation de ces réservoirs composites consiste à déposer sur la surface du mandrin des fibres imprégnées de résine suivant une trajectoire préalablement définie. Après bobinage du matériau composite, ce dernier subit une polymérisation effectuée en étuve ou autoclave.

Ensuite, le mandrin doit être extrait de la capacité polymérisée par une opération dite de démandrinage et plusieurs techniques d'extraction existent actuellement.

L'une de ces techniques consiste à réaliser le mandrin en un matériau soluble dans l'eau. Ainsi, le bobinage est réalisé sur une couche du mandrin en un matériau du type sable ou microbilles aggloméré avec une résine soluble et polymérisée par étuvage. Après polymérisation du matériau composite bobiné sur ce mandrin, l'agglomérat de ce dernier est dissout à l'eau pour retirer ainsi le mandrin dissout de l'intérieur du réservoir polymérisé.

Cependant, l'utilisation d'un mandrin en matériau soluble n'est pas optimisée pour des capacités de grandes dimensions, telles que par exemple les réservoirs de propulseurs à poudre de fusées, du fait de son poids et de la masse importante à dissoudre de matériau soluble nécessitant en outre une consommation d'eau chaude non négligeable. En outre, l'utilisation de mandrins solubles est extrêmement coûteuse puisqu'il faut confectionner autant de mandrins solubles que de capacités à bobiner et ne convient donc pas pour des cadences élevées de fabrication de telles capacités.

Une autre technique consiste à utiliser un mandrin rétractable. Un tel mandrin est constitué d'une structure en acier, en aluminium ou en matériau composite pourvue d'un mécanisme interne permettant, après polymérisation de la capacité bobinée, une réduction de son diamètre pour assurer l'extraction du mandrin de la capacité bobinée.

Cependant, un tel mandrin rétractable est très onéreux à réaliser du fait de la présence du mécanisme interne de réduction de son diamètre.

Pour les gros propulseurs à poudre de fusées, on préfère utiliser des mandrins métalliques démontables.

Un tel mandrin est constitué de plusieurs pièces élémentaires fixées mécaniquement les unes aux autres et dont la taille permet leur extraction, manuellement ou automatiquement, par l'une des ouvertures polaires du réservoir de propulseur. L'opération de démandrinage du mandrin, après polymérisation du matériau composite du réservoir du propulseur, et de reconstitution ou mandrinage de ce mandrin nécessite un grand nombre de pièces élémentaires à manipuler pour les désolidariser, les extraire de l'intérieur du réservoir de propulseur bobiné et les resolidariser les unes aux autres. A titre d'exemple, pour un réservoir de propulseur à poudre de fusées d'un diamètre de deux mètres et d'une longueur de huit mètres, le nombre de pièces élémentaires à manipuler est compris entre cinquante et cent.

Le document US 5 266 137 divulgue un mandrin métallique creux démontable pour le bobinage d'une capacité composite, telle qu'un réservoir de propulseur à poudre d'une fusée, caractérisé en ce que le mandrin comprend deux parties interconnectées et démontables et notamment une partie cylindrique, qui comprend une pluralité de segments allongés, rectangulaires et arqués, assemblés côte à côte les uns aux autres par un tenon le long d'un côté longitudinal de chaque segment allongé et engagé dans une mortaises le long du côté longitudinal adjacent d'un segment voisin.

Ainsi, les mandrins métalliques démontables actuels sont très chers du fait de leur complexité et leur cycle d'utilisation est très long du fait des nombreuses pièces élémentaires à manipuler pour les démonter puis les remonter pour un nouvel usage.

La présente invention a pour but de pallier les inconvénients ci-dessus des mandrins connus jusqu'à maintenant.

L'invention propose ainsi un mandrin métallique creux démontable qui soit à la fois peu coûteux à réaliser, d'une mise en oeuvre extrêmement simple, ayant une bonne propriété de résistance mécanique aux efforts de bobinage, notamment une bonne résistance à la compression, et permettant de réduire très significativement la durée des opérations de démandrinage et de reconstitution du mandrin par rapport aux mandrins connus.

A cet effet, selon l'invention, le mandrin métallique creux démontable pour le bobinage d'une capacité composite, telle qu'un réservoir de propulseur à poudre d'une fusée, est caractérisé en ce que le mandrin comprend trois parties interconnectées et démontables respectivement une partie cylindrique et deux parties d'extrémités en forme de dômes présentant une symétrie de révolution autour de l'axe longitudinal de la partie cylindrique, qui comprend une pluralité de segments allongés, rectangulaires et arqués, assemblés côte à côte les uns aux autres par des tenons répartis le long d'un côté longitudinal de chaque segment allongé et engagés respectivement dans des mortaises réparties le long du côté longitudinal adjacent d'un segment voisin, et en ce que les segments allongés sont maintenus assemblés côté à côte par des moyens de fixation amovibles serrant les tenons dans leurs mortaises respectives.

De préférence, la partie cylindrique du mandrin métallique comprend également un linteau longiligne amoviblement fixé.par des moyens de fixation entre deux côtés longitudinaux adjacents respectivement de deux segments allongés voisins ne comportant pas d'assemblage à tenons et mortaises et servant de clé de fermeture de la partie cylindrique, le linteau formant clé de fermeture pouvant être extrait radialement à l'intérieur de la partie cylindrique après retrait de ses moyens de fixation lors du démontage de la partie cylindrique.

De préférence, chaque côté longitudinal d'un segment allongé est constitué par une paroi radialement interne s'étendant le long du bord longitudinal du segment allongé et les tenons ou les mortaises sont formés sur la face externe de la paroi radialement interne correspondante d'un segment allongé.

En outre, les côtés longitudinaux adjacents ne comportant pas d'assemblage à tenons et mortaises respectivement des deux segments allongés voisins entre lesquels est fixé le linteau formant clé de fermeture, sont constitués chacun par une paroi radialement interne s'étendant le long du bord longitudinal du segment allongé correspondant.

De préférence, le linteau formant clé de fermeture comporte deux parois latérales dont les deux faces latérales externes sont inclinées en s'évasant vers l'intérieur de la partie cylindrique et qui sont maintenues en appui par les moyens de fixation respectivement sur les deux faces externes inclinées et conjuguées des deux parois radialement internes des deux segments allongés.

Avantageusement, les moyens de fixation du linteau formant clé de fermeture entre les deux segments allongés voisins comprennent au moins deux paires de boulons à vis à tiges tronconiques et extrémités filetées, disposées au voisinage des deux extrémités du linteau formant clé de fermeture et les deux boulons d'une même paire sont disposés coaxialement, chaque boulon de fixation ayant sa tige tronconique traversant deux perçages tronconiques coaxiaux d'une paroi radialement interne de segment allongé correspondant et de la paroi latérale adjacente du linteau formant clé de fermeture, la tige tronconique de la vis du boulon étant bloquée dans les deux perçages tronconiques par un écrou vissé à l'extrémité filetée de cette tige à l'intérieur du linteau formant clé de fermeture.

De préférence, les moyens de fixation amovibles serrant les tenons dans leurs mortaises respectives comprennent des boulons traversant perpendiculairement les parois radialement internes adjacentes de deux segments allongés voisins et certains des tenons et mortaises de ces parois.

Avantageusement, chaque tenon présente en section transversale au côté longitudinal de chaque segment allongé une forme de trapèze isocèle.

De préférence, deux segments allongés voisins comprennent au voisinage de leurs extrémités des moyens permettant de positionner longitudinalement l'un par rapport à l'autre les deux segments allongés lors de l'assemblage des tenons de l'un des segments allongés respectivement dans les mortaises de l'autre élément allongé de manière que les faces en bout des deux segments allongés soient coplanaires.

Avantageusement, les moyens de positionnement précités comprennent au voisinage de chacune des deux extrémités des deux segments allongés voisins une dent rectiligne à flans inclinés s'étendant transversalement au côté longitudinal d'un segment et une entaille rectiligne s'étendant transversalement au côté longitudinal de l'autre segment et de forme conjuguée à la dent rectiligne de manière que cette dernière puisse s'engager dans l'entaille rectiligne lors de l'assemblage des tenons dans leurs mortaises respectives des deux segments allongés.

De préférence, chaque partie d'extrémité en forme de dôme comprend une pluralité de secteurs angulaires amoviblement fixés les uns aux autres par des moyens de fixation en définissant une ouverture polaire.

Chaque partie d'extrémité en forme de dôme comprend en outre un premier secteur angulaire formant clé de fermeture de la partie formant dôme amoviblement fixé par des moyens de fixation entre un secteur angulaire adjacent et un second secteur angulaire formant clé amoviblement fixé par des moyens de fixation à un secteur angulaire adjacent, le second secteur angulaire formant clé pouvant être retiré en premier radialement vers l'intérieur de la partie d'extrémité en forme de dôme lors du démontage des secteurs angulaires de la partie en forme de dôme.

De préférence, chaque secteur angulaire comprend deux parois latérales radiales raccordées l'une à l'autre d'une part par une partie dorsale constituée d'une paroi arquée et d'une paroi plane perpendiculaire à l'axe longitudinal de la partie cylindrique, laquelle paroi plane est raccordée à une paroi interne arquée définissant avec les autres parois internes arquées des autres secteurs angulaires l'ouverture polaire, et d'autre part par une paroi plane frontale et arquée amoviblement fixée en bout correspondant de la partie cylindrique.

Les parois latérales radiales de deux secteurs angulaires adjacents hormis celles des premier et second secteurs angulaires formant clés comprennent d'une part respectivement un tenon rectiligne et une mortaise conjuguée dans laquelle est engagée le tenon rectiligne qui s'étend obliquement vers l'axe longitudinal de la partie cylindrique à partir des parois frontales juxtaposées des deux secteurs angulaires et d'autre part, respectivement un tenon rectiligne radial et une mortaise radiale conjuguée dans laquelle est engagé le tenon rectiligne radial.

De préférence, les moyens de fixation de deux secteurs angulaires adjacents comprennent deux boulons traversant les deux parois latérales radiales juxtaposées de ces deux secteurs.

Avantageusement, les deux boulons traversent le tenon et la mortaise des deux parois latérales radiales juxtaposées des deux secteurs angulaires adjacents.

La paroi frontale annulaire définie par les secteurs angulaires fixés les uns aux autres de chaque partie d'extrémité en forme de dôme est amoviblement fixée à la face externe annulaire de la paroi annulaire en bout correspondant de la partie cylindrique par des boulons à vis à tiges tronconiques et extrémités filetées, chaque boulon ayant sa tige tronconique traversant deux perçages tronconiques coaxiaux des deux parois annulaires, laquelle tige tronconique est bloquée dans ces deux perçages par un écrou vissé à l'extrémité filetée de la tige et en appui sur la face interne de la paroi annulaire en bout de la partie cylindrique.

L'invention sera mieux comprise, et d'autres buts, caractéristiques, détails et avantages de celle-ci apparaîtront plus clairement dans la description explicative qui va suivre faite en référence aux dessins annexés donnés uniquement à titre d'exemple illustrant un mode de réalisation de l'invention et dans lesquels :
- la figure 1 est une vue de face de la partie cylindrique d'un mandrin métallique démontable de l'invention, seul l'un des dômes d'extrémités étant représenté ;
- la figure 2 est une vue agrandie en bout suivant la flèche II de la figure 1 ;
- la figure 3 est une vue agrandie en bout suivant la flèche III de la figure 1 ;
- la figure 4 est une vue en perspective de l'ensemble de la figure 1 ;
- la figure 5 est une vue agrandie de la partie cerclée en V de la figure 4 ;
- la figure 6 est une vue agrandie de la partie cerclée en VI de la figure 4 ;
- la figure 7 est une vue en section suivant la ligne VII-VII de la figure 6 ;
- la figure 8 est une vue en section suivant la ligne VIII-VIII de la figure 4 ;

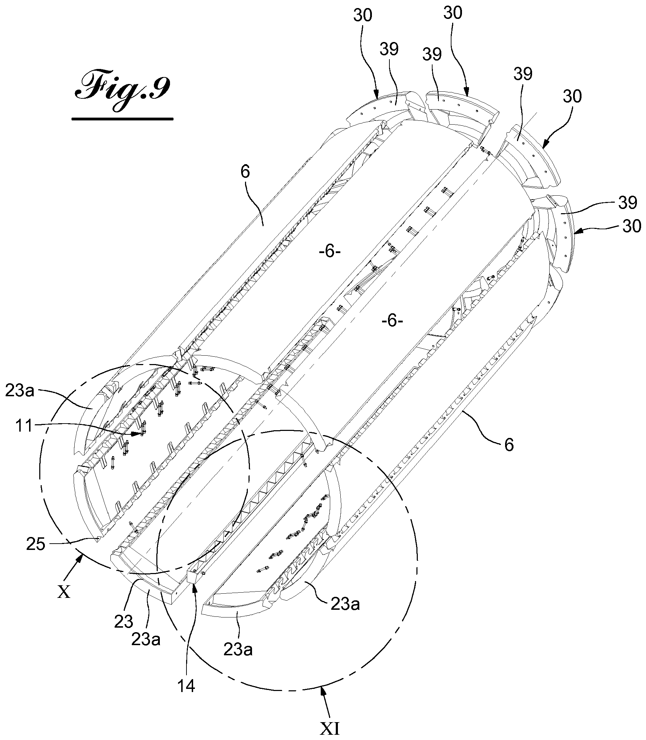

- la figure 9 est une vue en perspective éclatée de l'ensemble de la figure 4 ;
- la figure 10 est une vue agrandie de la partie cerclée en X de la figure 9 ;

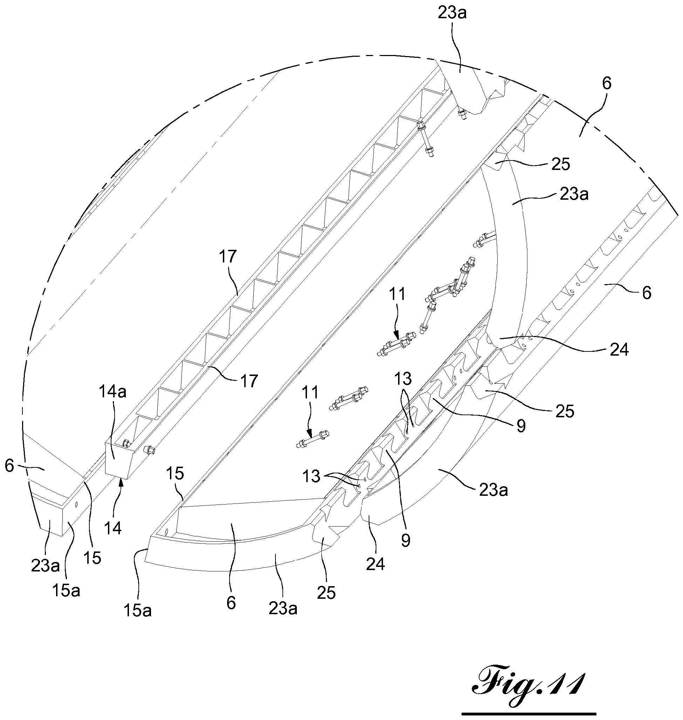

- la figure 11 est une vue agrandie de la partie cerclée en XI de la figure 9 ;

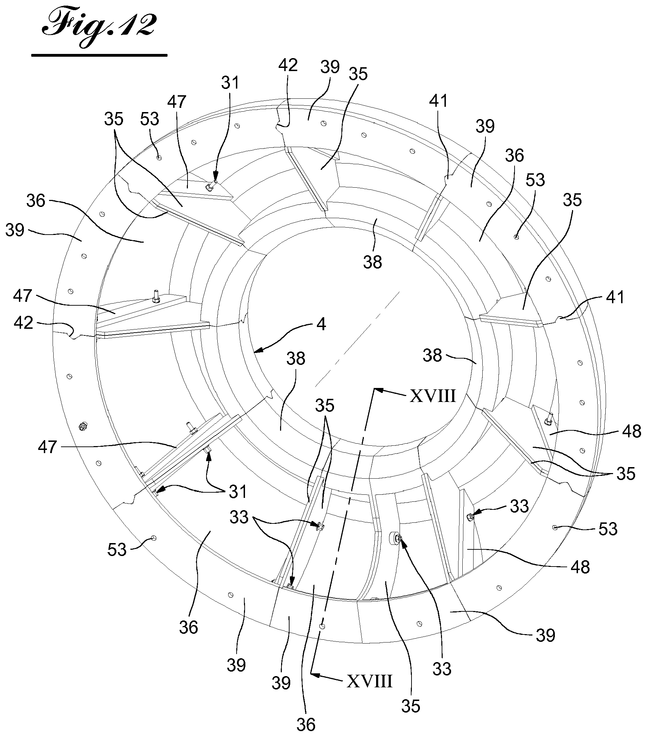

- la figure 12 est une vue en perspective agrandie du dôme d'extrémité de la figure 1 ;
- la figure 13 est une vue en perspective éclatée du dôme d'extrémité de la figure 12 ;
- la figure 14 est une vue en section dans un plan vertical du dôme d'extrémité de la figure 1 et pourvu d'un axe tubulaire ;

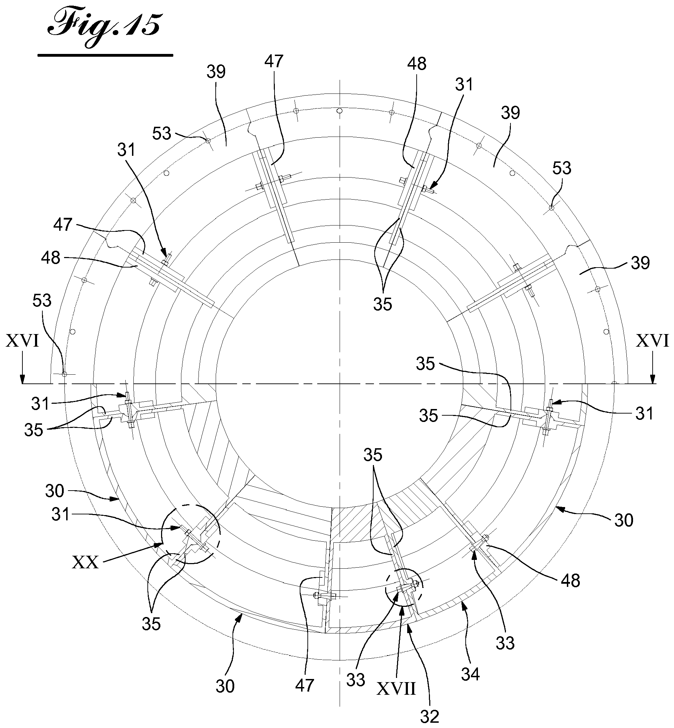

- la figure 15 est une vue agrandie en section suivant la ligne XV-XV de la figure 1 ;

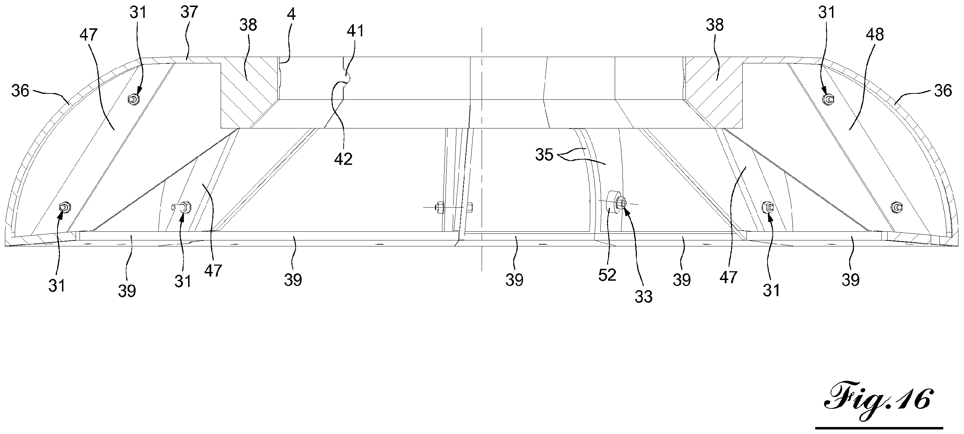

- la figure 16 est une vue en section suivant la ligne XVI-XVI de la figure 15 ;
- la figure 17 est une vue agrandie de la partie cerclée en XVII de la figure 15 ;
- la figure 18 est une vue en section suivant la ligne XVIII-XVIIII de la figure 12 ;
- la figure 19 est une vue agrandie de la partie cerclée en XIX de la figure 18 ; et
- la figure 20 est une vue agrandie de la partie cerclée en XX de la figure 15.

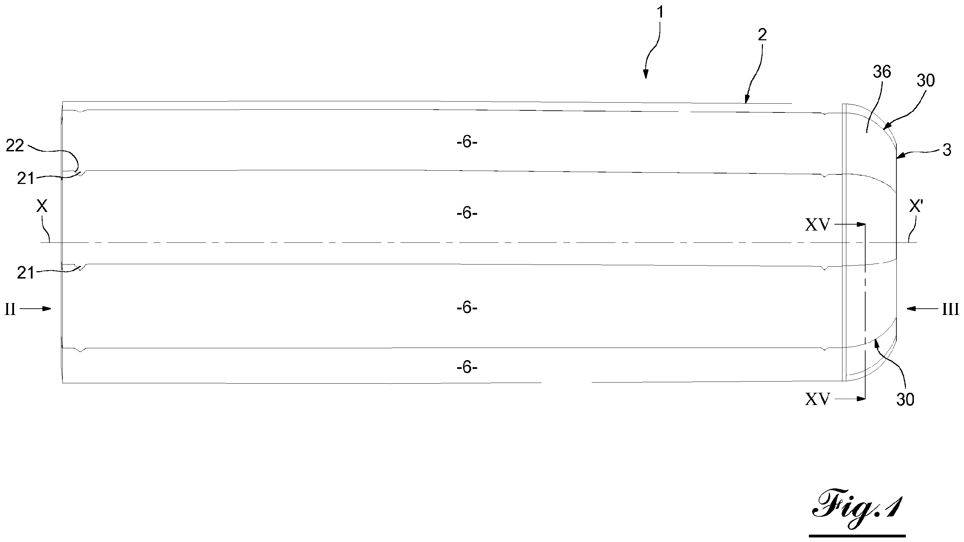

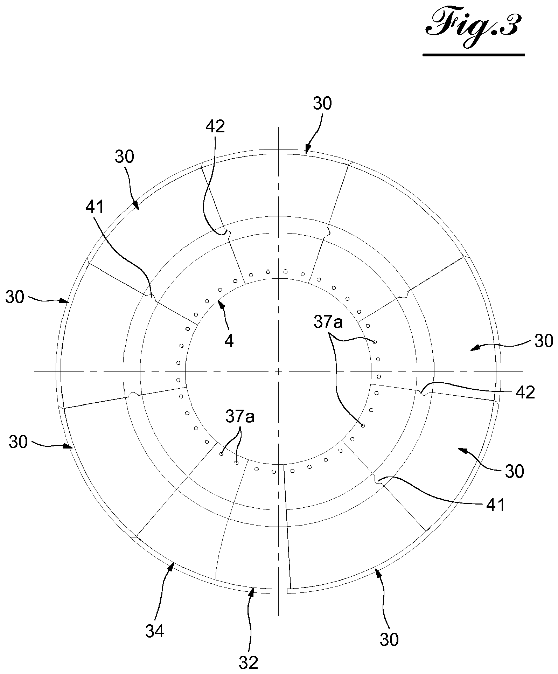

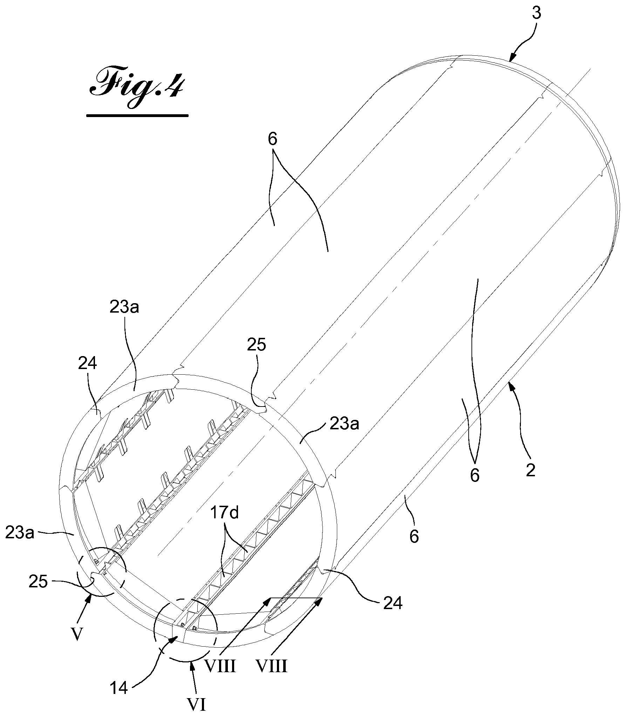

En se référant notamment aux figures 1 à 4, la référence 1 désigne un mandrin métallique creux démontable pour le bobinage d'une capacité composite notamment de grande dimension, telle qu'un réservoir de propulseur à poudre d'une fusée.

Selon l'invention, le mandrin 1 comprend trois parties interconnectées et démontables respectivement, une partie cylindrique 2 et deux parties d'extrémités en forme de dômes avant, non représentée, et arrière 3, chaque partie d'extrémité en forme de dôme 3 définissant une ouverture polaire 4.

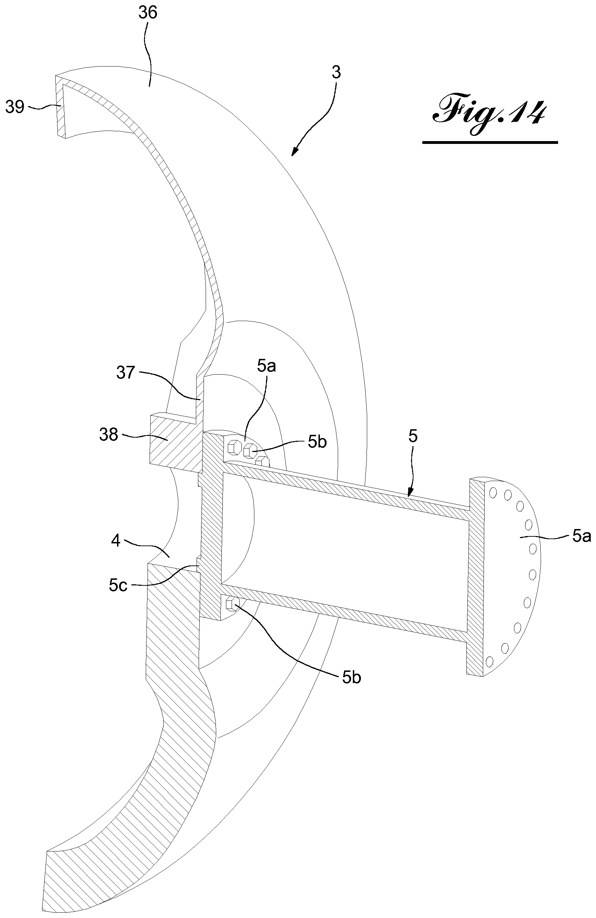

Le mandrin 1 comprend en outre deux axes cylindriques tubulaires avant et arrière 5, dont seul l'axe cylindrique arrière 5 est représenté en figure 14, et amoviblement fixés aux extrémités respectivement des deux parties d'extrémités en forme de dôme 3 du mandrin 1 coaxialement aux deux ouvertures polaires 4.

Les deux axes avant et arrière 5 permettent de monter le mandrin 1 sur une structure permettant d'entraîner en rotation le mandrin lors d'une opération de bobinage de la capacité sur ce mandrin.

La partie cylindrique 2, les deux parties d'extrémités en forme de dôme 3 et les deux axes avant et arrière 5 du mandrin 1 présentent ainsi une symétrie de révolution autour de l'axe longitudinal X-X' de la partie cylindrique 2.

La partie cylindrique 2 du mandrin 1 comprend une pluralité de segments allongés, rectangulaires et arqués 6, qui sont assemblés côte à côte les uns aux autres par des tenons 7 répartis le long d'un côté longitudinal 8 de chaque segment allongé 6 et engagés respectivement dans des mortaises 9 réparties le long du côté longitudinal adjacent 10 d'un segment allongé voisin 6.

Les segments allongés 6 sont maintenus assemblés côte à côte par des moyens de fixation amovibles 11 serrant les tenons 7 dans leurs mortaises respectives 9.

Les deux côtés longitudinaux 8, 10 d'un même segment allongé 6 comportant respectivement les tenons 7 et les mortaises 9 sont constitués chacun par une paroi radialement interne s'étendant le long du bord longitudinal du segment allongé 6 et les tenons 7 ainsi que les mortaises 9 sont formés sur les deux faces externes respectivement des deux parois radialement internes 8, 10 de ce segment allongé. Ainsi, les parois radialement internes des segments allongés 6 s'étendent parallèlement à l'axe longitudinal X-X' de la partie cylindrique 2 du mandrin 1. Avantageusement, les tenons 7 et les mortaises 9 sont régulièrement répartis le long de leurs parois radialement internes respectives 8, 10.

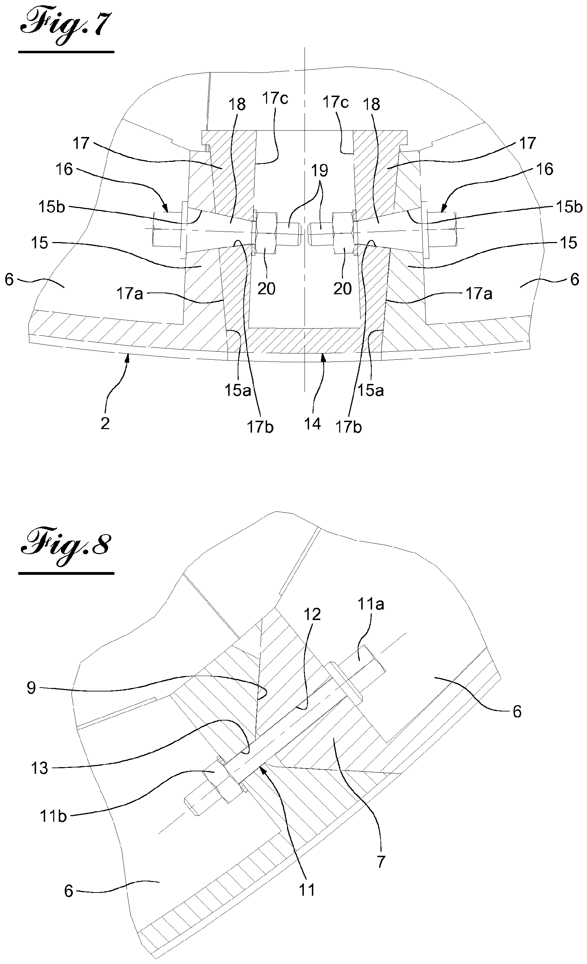

Chaque tenon 7 présente en section transversale à la paroi radialement interne 8 de chaque segment allongé 6 une forme de trapèze isocèle engagé dans la forme conjuguée de la mortaise correspondante 9 de la paroi radialement interne adjacente 10 du segment allongé voisin 6 comme cela ressort mieux de la figure 8.

Les moyens des fixation 11 permettant de fixer les uns aux autres côte à côte les segments allongés 6 et de maintenir assemblés les tenons 7 dans leurs mortaises respectives 9 sont constitués par des boulons.

De préférence, les boulons 11 traversent perpendiculairement les deux parois radialement internes 8, 10 de deux segments allongés voisins 6 ainsi que certains des tenons 7 et mortaises 9 de ces deux parois.

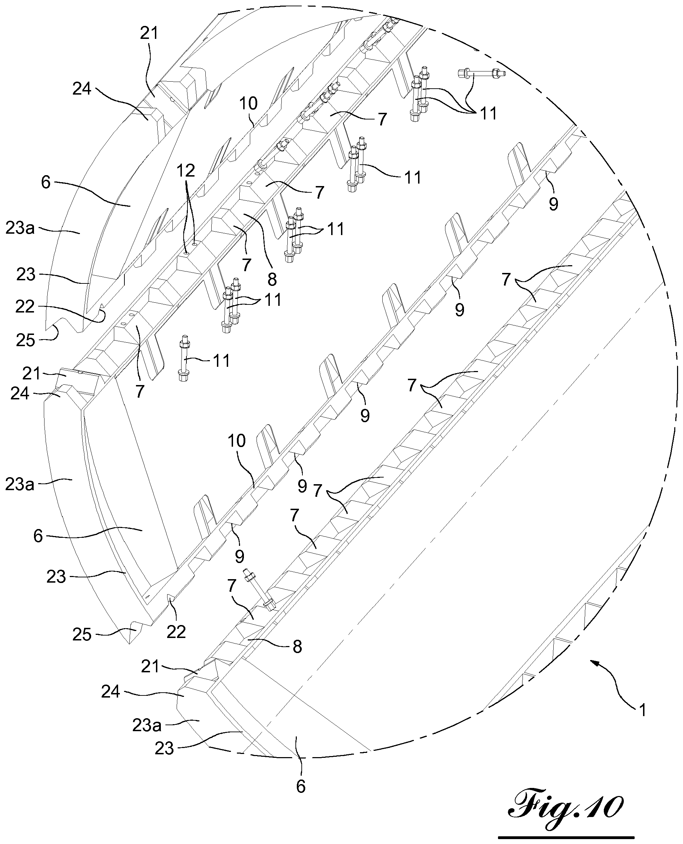

Comme cela ressort des figures 8 et 10, certains des tenons 7 comportent deux perçages 12 traversant les tenons perpendiculairement à la paroi radialement interne correspondante 8 en débouchant de la petite base du trapèze isocèle du tenon 7 opposée à la paroi 8. Les deux perçages traversants 12 permettent le passage respectivement de deux boulons 11 qui traversent également deux perçages 13 traversant les fonds des mortaises correspondantes 9 et la paroi radialement interne 10, coaxialement respectivement aux deux perçages 12 du tenon 7. Chaque boulon 11 a sa tête 11a et son écrou 11b en appui serré respectivement sur les faces internes des deux parois radialement internes 8, 10 de deux segments allongés voisins 6 pour enserrer le tenon 7 dans sa mortaise respective 9.

Chaque paire de boulons 11 peut traverser un tenon sur deux de la série de tenons s'étendant le long de la paroi radialement interne correspondante 8 d'un segment allongé 6.

Bien entendu, chaque tenon 7 peut être bloqué dans sa mortaise correspondante 9 par un seul boulon 11.

La partie cylindrique 2 du mandrin 1 comprend également un linteau longiligne 14 amoviblement fixé entre deux parois longitudinales adjacentes lisses 15 respectivement de deux segments allongés voisins 6, c'est-à-dire que les deux parois longitudinales 15 ne comportent pas d'assemblage à tenons et mortaises.

Le linteau longiligne 15, qui s'étend ainsi suivant une direction parallèle à l'axe longitudinal X-X' de la partie cylindrique 2 sert de clé de fermeture de la partie cylindrique 2 et peut être extrait radialement à l'intérieur de la partie cylindrique 2 lors du démandrinage ou démontage de la partie cylindrique 2 après avoir retiré les moyens de fixation 16 du linteau longiligne 14 d'entre les deux parois longitudinales 15 des deux segments allongés voisins 6.

Le linteau formant clé de fermeture 14 comprend deux parois latérales 17 dont les deux faces latérales externes 17a sont inclinées en s'évasant vers l'intérieur de la partie cylindrique 2 et qui sont maintenues en appui par les moyens de fixation 16 respectivement sur les deux faces externes inclinées et conjuguées 15a des deux parois radialement internes lisses 15 des deux segments allongés voisins 6. Ainsi, le linteau 14 est creux entre ses deux parois latérales 17 et comportent des nervures ou cloisons internes de rigidification 17d.

Les moyens de fixation 16 du linteau formant clé de fermeture 14 entre les deux segments allongés voisins 6 comprennent au moins deux paires de boulons à vis à tiges tronconiques ou en pinoche 18 et extrémités filetées 19 et disposées au voisinage respectivement des deux extrémités du linteau formant clé de fermeture 14 avec les deux boulons 16 d'une même paire disposés coaxialement et traversant perpendiculairement les parois adjacentes 15, 17 des deux segments allongés 6 et du linteau 14.

Chaque boulon de fixation 16 a sa tige tronconique 18 traversant deux perçages tronconiques coaxiaux 15b, 17b, de la paroi radialement interne 15 du segment allongé correspondant 6 et de la paroi latérale adjacente 17 du linteau formant clé de fermeture 14. La tige tronconique 18 du boulon 16 est bloquée dans les deux perçages tronconiques 15b, 17b, par un écrou 20 vissé à l'extrémité filetée 19 de la tige 18 à l'intérieur du linteau formant clé de fermeture 14 et en appui sur la face interne correspondante 17c de la paroi latérale 17 du linteau formant clé de fermeture 14.

Bien entendu, il est possible de prévoir plusieurs paires de boulons de fixation 16 du linteau formant clé de fermeture 14 disposées régulièrement le long de ce linteau en s'étendant transversalement aux parois 15 des deux segments allongés voisins 6 et 17 du linteau formant clé de fermeture 14.

Par ailleurs, deux segments allongés voisins de chaque paire de segments 6 constituant la partie cylindrique 6 du mandrin 1 comprennent au voisinage de leurs extrémités opposées des moyens 21, 22 permettant de positionner longitudinalement l'un par rapport à l'autre les deux segments allongés lors de l'assemblage des tenons 7 de l'un des segments allongés 6 respectivement dans les mortaises 9 de l'autre segment allongé 6, de manière que les deux parois en bout arquées 23 des deux segments allongés 6 aient leurs faces externes d'extrémités 23a coplanaires. Ainsi, lorsque les segments allongés 6 sont fixés les uns aux autres et que le linteau formant clé de fermeture 14 est fixé entre ses deux segments allongés voisins 6, les faces d'extrémités externes 23a ainsi que la face d'extrémité externe 14a du linteau 14 d'un même côté de la partie cylindrique 2 sont situées dans un même plan transversal à l'axe longitudinal X-X' de la partie cylindrique 2. Dès lors, les différents segments allongés 6 ainsi que le linteau formant clé de fermeture 14 fixés les uns aux autres forment un corps creux de la partie cylindrique 2 du mandrin avec la partie cylindrique 2 ayant une surface périphérique externe arrondie et lisse sur laquelle peuvent être enroulées par bobinage des fibres de matériaux composites.

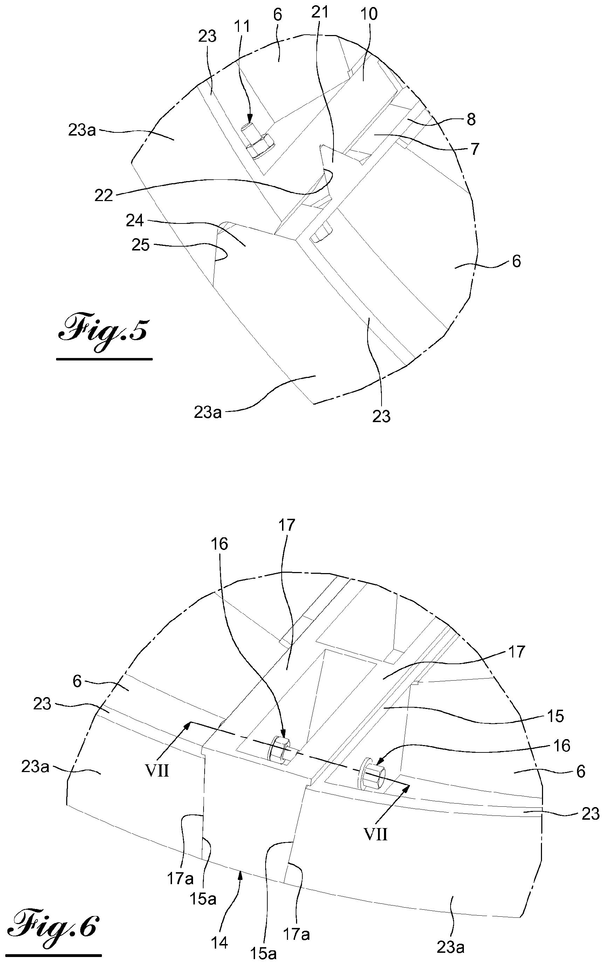

De préférence, les moyens de positionnement 21, 22 comprennent au voisinage des deux extrémités de deux segments allongés voisins 6 une dent rectiligne 21 à flancs inclinés s'étendant transversalement à la paroi radialement interne 8 de l'un des deux segments allongés 6 et une entaille rectiligne 22 s'étendant transversalement à la paroi radialement interne 10 de l'autre segment allongé 6, laquelle entaille rectiligne 22 présente une forme conjuguée à celle de la dent rectiligne 21 de manière que cette dernière puisse s'engager dans l'entaille rectiligne 22 lors de l'assemblage des tenons 7 dans leurs mortaises respectives 9 des deux segments allongés 6 comme cela ressort mieux de la figure 5.

Les deux parois radialement internes 8 et 10 de chaque segment allongé 6 comportent à chacune de leurs extrémités opposées respectivement un tenon 24 et une mortaise 25 adjacents à la dent rectiligne 21 et à l'entaille rectiligne 22 en étant situés dans le prolongement de la paroi en bout arquée 23 du segment allongé 6. Chaque tenon d'extrémité 24 présente en section transversale à la paroi radialement interne 8 une forme de trapèze isocèle. Lorsque les segments allongés 6 sont fixés les uns aux autres, chaque tenon 24 d'un segment allongé 6 s'engage dans une mortaise conjuguée 25 du segment allongé voisin.

La figure 5 montre qu'un boulon 11 traverse transversalement deux parois radialement internes 8, 10 de chaque paire de segments allongés 6 dans l'espace entre le tenon d'extrémité 24 et la dent rectiligne 21 pour fixer les unes aux autres les parties d'extrémités opposées des segments allongés adjacents 6.

Chaque partie d'extrémité en forme de dôme 3 comprend une pluralité de secteurs angulaires 30 amoviblement fixés les uns aux autres par des moyens de fixation 31 pour définir l'ouverture polaire 4.

Chaque partie d'extrémité en forme de dôme 3 comprend en outre un premier secteur angulaire 32 formant clé de fermeture de la partie formant dôme 3, amoviblement fixé par des moyens de fixation 33 entre un secteur angulaire adjacent 30 et un second secteur angulaire 34 formant clé amoviblement fixé par des moyens de fixation 33 à un secteur angulaire adjacent 30.

Comme on le verra ultérieurement, le second secteur formant clé 34 est retiré en premier vers l'intérieur de la partie d'extrémité en forme de dôme 3 lors du démontage des secteurs 30 de la partie en forme de dôme 3 et le premier secteur angulaire formant clé 32 est monté en dernier par l'extérieur une fois que les secteurs angulaires 30 et le second secteur angulaire formant clé 34 ont été fixés les uns aux autres lors du montage de la partie formant dôme 3.

Chaque secteur angulaire 30, 32 et, 34 comprend deux parois latérales radiales 35 raccordées l'une à l'autre par une partie dorsale constituée d'une paroi arquée 36 et d'une paroi plane 37 perpendiculaire à l'axe longitudinal X-X' de la partie cylindrique 2 du mandrin 1, laquelle paroi plane 37 est raccordée à une paroi interne arquée 38 définissant avec les autres parois internes arquées des autres secteurs angulaires 30, 32, 34, une partie cylindrique interne définissant l'ouverture polaire 4.

Les deux parois latérales radiales 35 de chaque secteur angulaire 30, 32, 34 sont également raccordées l'une à l'autre par une paroi plane frontale et arquée 39 et ses parois frontales 39 forment une paroi annulaire lorsque les secteurs angulaires 30, 32 et 34 sont fixés les uns aux autres. Cette paroi annulaire est amoviblement fixée à la paroi annulaire en bout correspondante définie par les parois arquées 23 des secteurs allongés 6 de la partie cylindrique 2 par l'intermédiaire de moyens de fixation 40.

Les parois latérales radiales 35 de chaque paire de secteurs angulaires adjacents 30 hormis les parois latérales radiales 35 des premier et second secteurs formant clés 32, 34, comprennent respectivement un tenon rectiligne 41 et une mortaise conjuguée 42 dans laquelle est engagé le tenon rectiligne 41.

Le tenon et la mortaise rectilignes 41, 42 s'étendent sur toute la largeur de leurs parois latérales radiales respectives 35 et obliquement vers l'axe longitudinal X-X' de la partie cylindrique 2 à partir des parois frontales juxtaposées 39 des deux secteurs angulaires voisins 30.

Les parois latérales radiales 35 de deux secteurs angulaires adjacents 30 comprennent en outre respectivement un tenon rectiligne radial 43 et une mortaise radiale conjuguée 44 dans laquelle est engagé le tenon rectiligne radial 43.

Les tenons 41, 43 et les mortaises 42, 44, peuvent être réalisés par emboutissage des parois latérales radiales 35.

Les tenons 41, 43 et leurs mortaises respectives 42, 44, permettent de positionner précisément les uns par rapport aux autres les différents secteurs angulaires 30 lors de leur assemblage de fixation les uns aux autres pour réaliser la partie en forme de dôme correspondante 3 et ces tenons et mortaises bloquent les degrés de liberté des segments angulaires 30.

Les moyens de fixation de deux secteurs angulaires adjacents 30 comprennent deux boulons parallèles 31 traversant les deux parois latérales radiales juxtaposées 35 de ces deux secteurs.

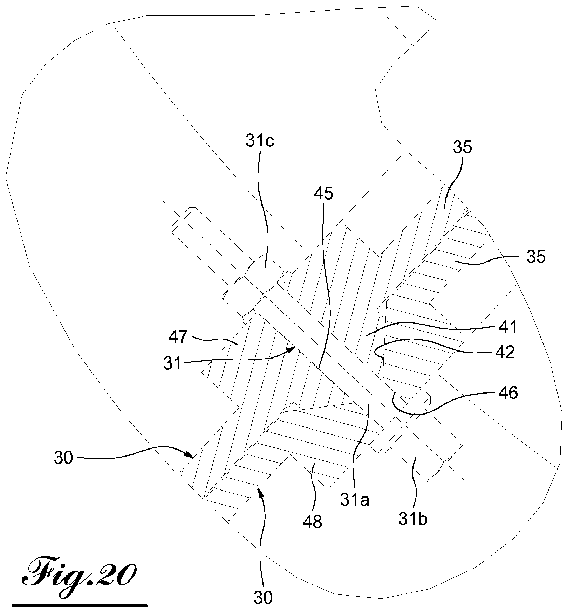

De préférence, comme cela ressort mieux de la figure 20, chaque boulon de fixation 31 a sa tige partiellement filetée 31a traversant deux perçages coaxiaux 45, 46, traversant notamment le tenon 41 et la mortaise correspondante 42 de deux parois latérales radiales adjacentes 35, les deux secteurs angulaires voisins 30. En outre, le perçage 45 traverse également une plaque rectangulaire 47 solidaire de la face interne de la paroi latérale radiale correspondante 35 le long du tenon rectiligne 41 et le perçage 46 traverse également une autre plaque rectangulaire 48 solidaire de la face interne de la paroi latérale radiale adjacente 35 et s'étendant le long de la mortaise correspondante 42 comme cela ressort mieux de la figure 20.

Ainsi, chaque boulon 31 d'une même paire de boulons de fixation de deux parois latérales radiales juxtaposées 35 de deux secteurs angulaires adjacents 30 enserre par sa tête 31b et son écrou 31c vissé sur la partie filetée de la tige 31a, le tenon 41 dans sa mortaise conjuguée 42.

Les moyens de fixation du premier secteur angulaire formant clé 32 au second secteur angulaire formant clé 34 comprennent deux boulons parallèles 33 traversant perpendiculairement les deux parois latérales radiales adjacentes 35 des premier et second secteurs angulaires formant clés 32, 34.

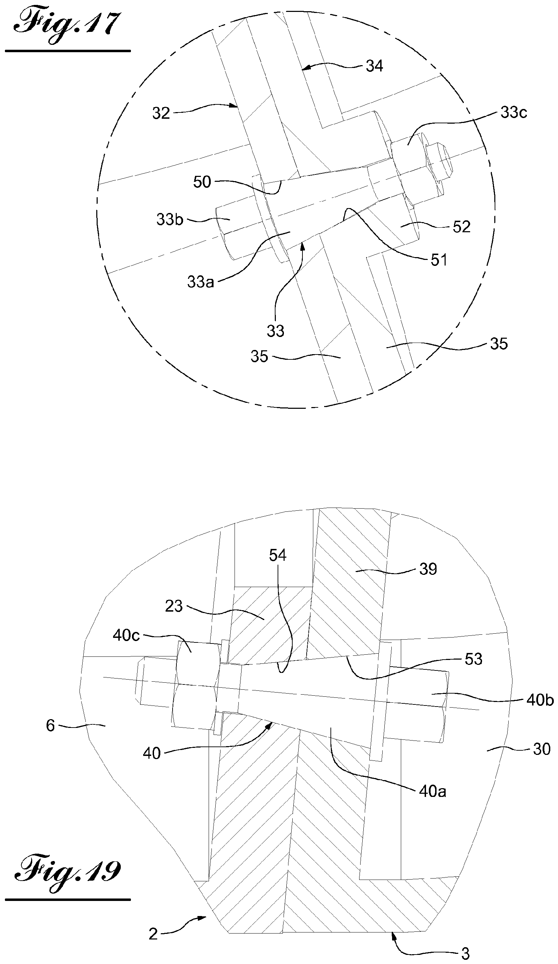

Plus précisément, comme cela ressort mieux de la figure 17, chaque boulon 33 a sa vis dont la tige 33a est tronconique ou en pinoche traversant deux perçages tronconiques coaxiaux 50 de la paroi latérale radiale 35 du premier secteur angulaire formant clé 32 et 51 de la paroi latérale radiale 35 du second secteur angulaire formant clé 34. Le perçage tronconique 51 traverse également une bague 52 solidaire de la face interne de la paroi latérale radiale 35 du second secteur angulaire formant clé 34. De la sorte, le boulon 33 bloque la tige tronconique 33a dans les deux perçages tronconiques 50, 51 par sa tête 33b en appui sur la face interne de la paroi latérale radiale 35 du premier secteur angulaire formant clé 32 et son écrou 33c vissé sur la partie d'extrémité filetée de la tige 33a et en appui sur la bague 52, assurant ainsi la fixation l'un à l'autre des premier et second secteurs angulaires formant clés 32, 34.

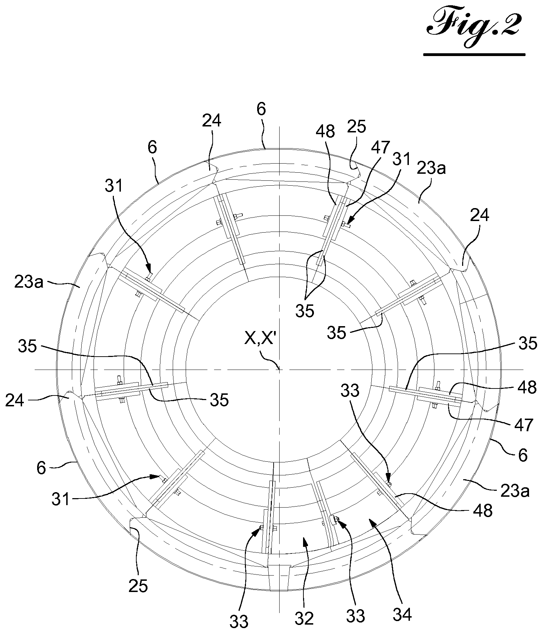

Il est à noter que la paroi 35 du second secteur angulaire formant clé 34 est inclinée relativement à la paroi adjacente 35 du premier secteur angulaire formant clé 32 suivant une pente permettant le retrait axialement du second secteur angulaire formant clé 34 vers l'intérieur de la partie formant dôme correspondante 3 lors du démontage vers l'intérieur des différents secteurs 30 en présence de la capacité polymérisée. Le cas échéant, la paroi adjacente 35 du premier secteur angulaire formant clé peut également être inclinée suivant le même angle que la paroi 35 du second secteur angulaire formant clé 34 comme cela ressort mieux de la figure 2. Cette inclinaison de chaque paroi 35 est définie par rapport au plan vertical à l'axe de révolution longitudinal de la partie formant dôme 3.

Les moyens de fixation du premier secteur angulaire formant clé 32 à son secteur adjacent 30 comprennent également deux boulons 33 traversant les parois adjacentes respectives 35 des deux secteurs 30, 32 ainsi qu'une plaque 47 solidarisée à la face de la paroi 35 du secteur angulaire 30 opposée à la paroi adjacente du secteur angulaire 32 et les moyens de fixation du second secteur angulaire formant clé 34 à son secteur angulaire adjacent 30 comprennent également deux boulons parallèles 33 traversant leurs parois adjacentes respectives 35 ainsi que la plaque 48 solidarisée à la face de la paroi 35 du secteur angulaire 30 opposée à la paroi adjacente du secteur angulaire 34. Ces deux paires de boulons 33 sont identiques à la paire de boulons 33 fixant l'un à l'autre les premier et second secteurs angulaires formant clés 32, 34 et ne seront donc pas à nouveau décrits.

Les moyens de fixation de la paroi annulaire frontale 39 de chaque partie en forme de dôme 3 à la paroi annulaire en bout correspondante 23 de la partie cylindrique 2 du mandrin 1 comprennent une pluralité de boulons 40 régulièrement espacés suivant une direction circonférentielle coaxialement à l'axe longitudinal X-X' de la partie cylindrique 2 du mandrin 1.

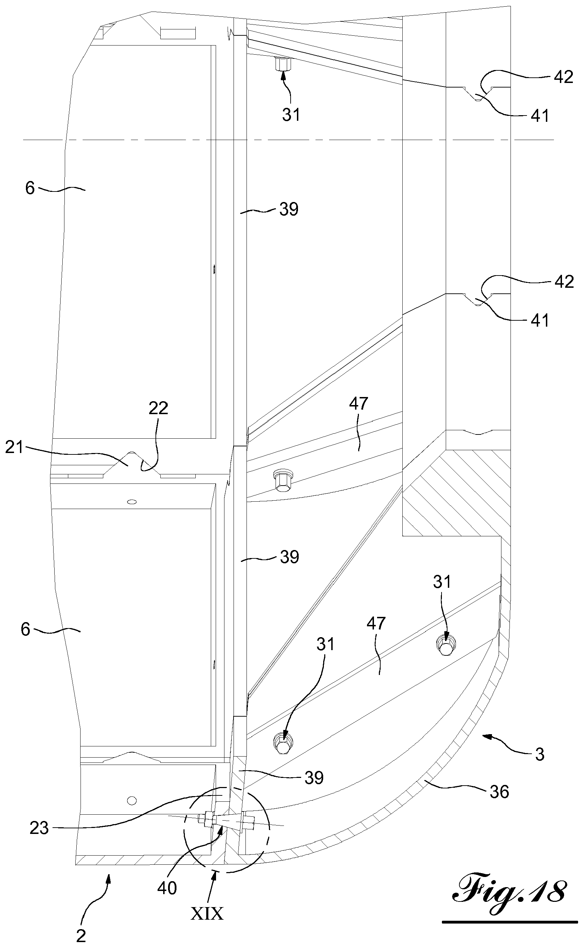

De préférence et comme représenté en figure 19, chaque boulon de fixation 40 a sa vis dont la tige 40a est tronconique ou en forme de pinoche traversant deux perçages tronconiques coaxiaux 53, 54 respectivement de la paroi annulaire frontale 39 de la partie en forme de dôme 3 et de la paroi annulaire en bout correspondante 23 de la partie cylindrique 2 du mandrin 1. La partie tronconique 40a de chaque boulon 40 est ainsi bloquée dans les deux perçages tronconiques 53, 54 par la tête 40b du boulon 40 en appui sur la face interne de la paroi frontale 39 et l'écrou 40c de ce boulon vissé sur la partie filetée de la tige 40a du boulon et en appui sur la face interne de la paroi annulaire en bout 23.

Il est à noter que la paroi latérale radiale 35 du second secteur angulaire formant clé 34 est inclinée relativement à la paroi latérale radiale 35 adjacente du premier secteur angulaire formant clé 32 dans un sens permettant le démontage radialement vers l'intérieur du second secteur angulaire formant clé 34 au début de l'opération de démontage des différents secteurs angulaires 30, 32 après polymérisation du réservoir de propulseur à poudre d'une fusée sur le mandrin 1.

La figure 14 représente la fixation de chaque axe cylindrique 5 à la partie formant dôme correspondante 3, dont les différents segments angulaires constitutifs ne sont pas représentés pour la simplicité.

L'axe cylindrique 5 comporte à chacune de ses deux extrémités une bride de fixation 5a, dont l'une est amoviblement fixée par des vis de fixation 5b à la face externe de la paroi centrale plane 37 définie par les secteurs angulaires 30, 32, 34 fixés les uns aux autres et bordant l'ouverture polaire 4 de la partie en forme de dôme 3. Les vis de fixation 5b traversent des trous taraudés 37a de la paroi 37. L'autre bride 5a de l'axe cylindrique 5 est destiné à être fixé à un moyen d'entraînement en rotation du mandrin 1 pour le bobinage du réservoir composite.

L'axe cylindrique 5 comporte un embout cylindrique 5c de courte longueur engagé dans l'ouverture polaire 4 pour assurer la coaxialité de l'axe 5 dans cette ouverture.

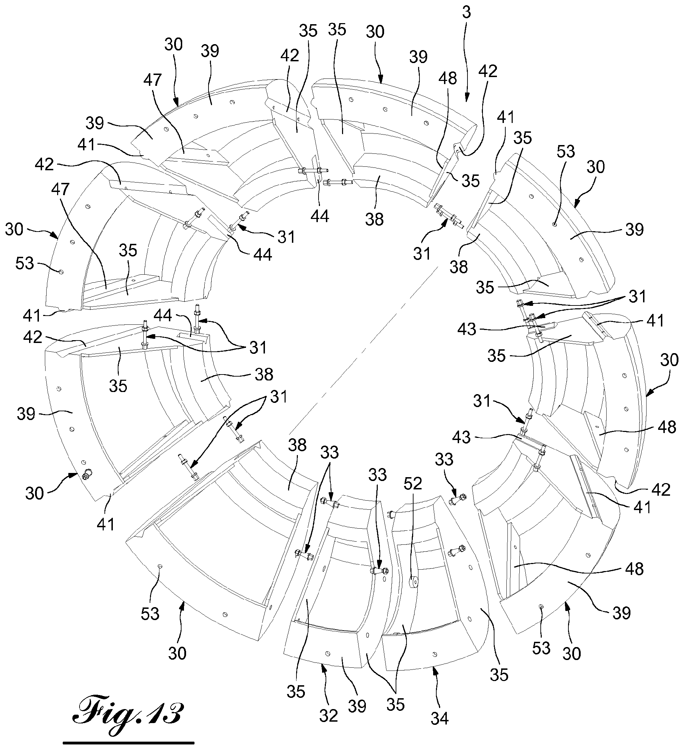

Le nombre de segments angulaires 30 est lié au diamètre de l'ouverture polaire pour permettre leur extraction. Comme représenté à titre d'exemple, notamment à la figure 13, huit secteurs angulaires 30 sensiblement identiques peuvent être prévus et les premier et second secteurs formant clés 32, 34 lorsque assemblés l'un à l'autre sont identiques ensemble en dimension à chaque secteur angulaire 30. De la sorte, les différents secteurs 30, 32, 34 peuvent être fixés respectivement à neuf segments allongés 6 définissant la partie cylindrique 2 du mandrin 1.

Les opérations de démontage (démandrinage) du mandrin 1 une fois la capacité polymérisée sur ce mandrin s'effectuent à une station de désassemblage.

Le démontage du mandrin 1, qui s'effectue à travers l'une des ouvertures polaires 4 de celui-ci, débute par le démontage des segments allongés 6 de la partie cylindrique 2 du mandrin 1.

Tout d'abord, le linteau formant clé de fermeture 14, après enlèvement de ses moyens de fixation 16 d'entre les deux segments allongés voisins 6, est retiré radialement vers l'axe longitudinal X-X' de la partie cylindrique 2 du mandrin 1 puis est translaté axialement parallèlement à l'axe X-X' pour le sortir et le stocker sur un poste de repos à l'extérieur du mandrin 1.

Ensuite, les boulons de fixation 40 de chaque partie en forme de dôme 3 à l'extrémité de la partie cylindrique 2 du mandrin 1 sont retirés pour permettre le démontage les uns des autres des différents segments allongés 6 constituant la partie cylindrique 2.

A cet effet, les boulons de fixation 11 des différents segments allongés 6 sont retirés et ensuite le pivotement de chaque segment allongé 6 relativement au segment allongé voisin 6 autour d'un axe parallèle à l'axe longitudinal X-X' est effectué pour désemboîter les tenons 7 de leurs mortaises respectives 9 puis une légère rotation du mandrin 1 est effectuée pour permettre une translation radiale de chaque segment allongé 6 à l'intérieur de la partie cylindrique 2 et une translation axiale du secteur allongé 6 parallèlement à l'axe longitudinal X-X' afin d'extraire chaque segment allongé 6 de la capacité.

Chaque segment allongé 6 est ainsi extrait de la capacité puis positionné sur un poste de mandrinage sur lequel est reconstituée la partie cylindrique 2 du mandrin 1 en assemblant à nouveau les uns aux autres les différents segments allongés constitutifs 6 de la partie cylindrique 2 et le linteau formant clé de fermeture 14 est monté et fixé en dernier entre les deux segments allongés voisins 6 pour assurer la stabilité des différents segments allongés 6 de la partie cylindrique 2.

Les tenons 7 engagés dans leurs mortaises respectives 9 des différents segments allongés 6 garantissent lors du remontage la géométrie de la partie cylindrique 2 du mandrin 1. Sur la station de mandrinage, les segments allongés 6 ainsi que le linteau formant clé de fermeture 14 sont à nouveau fixés les uns aux autres par les boulons de fixation 11 et 16.

Revenant sur le démontage complet du mandrin 1, les secteurs angulaires 30 doivent être extraits de la capacité vers l'intérieur en enlevant tout d'abord les boulons de fixation 33 du second secteur angulaire formant clé 34 d'entre le premier secteur angulaire formant clé 32 et le secteur angulaire 30 adjacent. Ensuite, le second secteur angulaire formant clé 34 est démonté en le déplaçant axialement vers l'intérieur de la partie en forme de dôme 3 puis les différents secteurs angulaires 30 sont désengagés les uns des autres après retrait de leur boulons de fixation respectifs 31 et le premier secteur angulaire formant clé de fermeture 32 est démonté en dernier de son secteur angulaire adjacent 30. Bien entendu, le retrait des différents secteurs angulaires 30, 32, 34 s'effectue après avoir retiré les vis des fixations 5b solidarisant chaque axe cylindrique 5 à la partie en forme de dôme correspondante 3.

Le remontage des secteurs angulaires de chaque partie en forme de dôme 3 s'effectue tout d'abord en fixant en premier le second secteur angulaire formant clé 34 au secteur angulaire adjacent 30 par les boulons de fixation 33 puis en fixant les uns aux autres successivement les secteurs angulaires 30 par des boulons de fixation 31 avec indexation de ces secteurs par leurs tenons respectifs 41, 43 engagés dans les mortaises correspondantes 42, 44. Le premier secteur angulaire formant clé de fermeture 32 est ensuite fixé par emboîtement en dernier en le déplaçant de l'extérieur radialement entre le second secteur angulaire formant clé 34 et son secteur angulaire adjacent 30 avant de le fixer entre ces deux secteurs 30, 34 par les boulons de fixation 33.

Les boulons de fixation 33 à tiges tronconiques 33a permettent d'indexer les uns relativement aux autres les premier et second secteurs angulaires formant clés 32, 34 et les secteurs angulaires voisins 30 situés de part et d'autre des deux secteurs 32, 34. Enfin, les deux axes cylindriques avant et arrière 5 sont fixés par les vis de fixation 5b aux extrémités des deux parties en forme de dôme 3 coaxialement à ces dernières.

L'utilisation de tenons 7 et mortaises 9 repartis le long des parois radialement internes 8, 10 définissant les côtés longitudinaux des segments allongés 6 pour assembler ces derniers les uns aux autres garantit la stabilité en flambement du mandrin, c'est-à-dire une bonne tenue à la pression externe du mandrin pendant le cycle de polymérisation en étuve de la capacité bobinée en maintenant serrés les tenons 7 dans leurs mortaises respectives 9 par des moyens mécaniques constitués par les boulons 11, ce qui assure une continuité de raideur transversale du mandrin.

En outre, la présence des tenons 7 et mortaises 9 des segments allongés 6, des tenons 41, 43 et des mortaises 42, 44 des secteurs angulaires 30 de chaque partie en forme de dôme 3 ainsi que l'utilisation de boulons à tiges tronconiques ou en pinoche 16, 33, 40 permettent d'assurer un bon positionnement rapide des segments allongés 6 et des secteurs angulaires 30 les uns relativement aux autres durant l'assemblage du mandrin, ainsi qu'une répétatibilité de montage des segments allongés 6 et des secteurs angulaires 30, 32, 34 durant la durée de vie du mandrin. Les différents boulons de fixation 11, 16, 33, 40 sont conservés durant la durée de vie du mandrin et du fait que leur nombre soit relativement limité permet des opérations de démontage et de remontage rapides allant jusqu'à permettre une automatisation de ces opérations à l'aide d'actionneurs pneumatiques.

Le mandrin métallique ci-dessus décrit de l'invention permet de réduire très significativement la durée des opérations de démontage (démandrinage) et de reconstitution du mandrin par rapport à l'état de la technique antérieurement connu jusqu'à maintenant. Ainsi, lorsque le mandrin est utilisé pour bobiner des réservoirs de propulseurs à poudre de fusées, la cadence de fabrication de tels réservoirs grâce au mandrin métallique de l'invention permettra de fabriquer un réservoir de propulseur par semaine, ce qui présente un intérêt important du point de vue économique.

## Revendications

1. Mandrin métallique creux démontable (1) pour le bobinage d'une capacité composite, telle qu'un réservoir de propulseur à poudre d'une fusée, **caractérisé en ce que** le mandrin (1) comprend trois parties interconnectées et démontables (2,3) respectivement une partie cylindrique (2) et deux parties d'extrémités en forme de dômes (3) présentant une symétrie de révolution autour de l'axe longitudinal (X-X') de la partie cylindrique (2), qui comprend une pluralité de segments allongés, rectangulaires et arqués (6), assemblés côte à côte les uns aux autres par des tenons (7) répartis le long d'un côté longitudinal de chaque segment allongé (6) et engagés respectivement dans des mortaises (9) réparties le long du côté longitudinal adjacent d'un segment voisin (6), et **en ce que** les segments allongés (6) sont maintenus assemblés côte à côte par des moyens de fixation amovibles (11) serrant les tenons (7) dans leurs mortaises respectives (9).

2. Mandrin métallique selon la revendication 1, **caractérisé en ce que** la partie cylindrique (2) comprend également un linteau longiligne (14) amoviblement fixé par des moyens de fixation (16) entre deux côtés longitudinaux adjacents respectivement de deux segments allongés voisins (6) ne comportant pas d'assemblage à tenons (7) et mortaises (9) et servant de clef de fermeture de la partie cylindrique (2), le linteau formant clé de fermeture (14) pouvant être extrait radialement à l'intérieur de la partie cylindrique (2) après retrait de ses moyens de fixation (16) lors du démontage de la partie cylindrique (2).

3. Mandrin métallique selon la revendication 1 ou 2, **caractérisé en ce que** chaque côté longitudinal d'un segment allongé (6) est constitué par une paroi radialement interne (8,10) s'étendant le long du bord longitudinal du segment allongé (6) et les tenons (7) ou les mortaises (9) sont formés sur la face externe de la paroi radialement interne correspondante (8,10) d'un segment allongé (6).

4. Mandrin métallique selon la revendication 2 ou 3, **caractérisé en ce que** les côtés longitudinaux adjacents ne comportant pas d'assemblage à tenons (7) et mortaises (9) respectivement des deux segments allongés voisins (6), entre lesquels est fixé le linteau formant clé de fermeture (14), sont constitués chacun par une paroi radialement interne (15) s'étendant le long du bord longitudinal du segment allongé correspondant (6).

5. Mandrin métallique selon la revendication 4, **caractérisé en ce que** le linteau formant clé de fermeture (14) comporte deux parois latérales (17) dont les deux faces latérales externes (17a) sont inclinées en s'évasant vers l'intérieur de la partie cylindrique (2) et qui sont maintenues en appui par les moyens de fixation (16) respectivement sur les deux faces externes inclinées et conjuguées (15a) des deux parois radialement internes (15) des deux segments allongés (6).

6. Mandrin métallique selon la revendication 4 ou 5, **caractérisé en ce que** les moyens de fixation du linteau formant clé de fermeture (14) entre les deux segments allongés voisins (6) comprennent au moins deux paires de boulons (16) à vis à tiges tronconiques (18) et extrémités filetées (19), disposées au voisinage des deux extrémités du linteau formant clé de fermeture (14) et les deux boulons (16) d'une même paire sont disposés coaxialement, chaque boulon de fixation (16) ayant sa tige tronconique (18) traversant deux perçages tronconiques coaxiaux (15b,17b) d'une paroi radialement interne (15) du segment allongé correspondant (6) et de la paroi latérale adjacente (17) du linteau formant clé de fermeture (14), la tige tronconique (18) de la vis du boulon (16) étant bloquée dans les deux perçages tronconiques (15b,17b) par un écrou 20) vissé à l'extrémité filetée (19) de cette tige à l'intérieur du linteau formant clé de fermeture (14).

7. Mandrin métallique selon l'une des revendications 3 à 6, **caractérisé en ce que** les moyens de fixation amovibles serrant les tenons (7) dans leurs mortaises respectives (9) comprennent des boulons (11) traversant perpendiculairement les parois radialement internes adjacentes (8,10) de deux segments allongés voisins (6) et certains des tenons (7) et mortaises (9) de ces parois.

8. Mandrin métallique selon l'une des revendications 1 à 7, **caractérisé en ce que** chaque tenon (7) présente en section transversale au côté longitudinal de chaque segment allongé (6) une forme de trapèze isocèle.

9. Mandrin métallique selon l'une des revendications 1 à 8, **caractérisé en ce que** deux segments allongés voisins (6) comprennent au voisinage de leurs extrémités des moyens (21,22) permettant de positionner longitudinalement l'un par rapport à l'autre les deux segments allongés (6) lors de l'assemblage des tenons (7) de l'un des segments allongés (6) respectivement dans les mortaises (9) de l'autre segment allongé (6) de manière que les faces en bout (23a) des deux segments allongés (6) soient coplanaires.

10. Mandrin métallique selon la revendication 9, **caractérisé en ce que** les moyens de positionnement comprennent au voisinage de chacune des deux extrémités des deux segments allongés voisins (6) une dent rectiligne à flancs inclinés (21) s'étendant transversalement au côté longitudinal d'un segment (6) et une entaille rectiligne (22) s'étendant transversalement au côté longitudinal de l'autre segment (6) et de forme conjuguée à la dent rectiligne (21) de manière que la dent rectiligne (21) puisse s'engager dans l'entaille rectiligne (22) lors de l'assemblage des tenons (7) dans leurs mortaises respectives (9) des deux segments allongés (6).

11. Mandrin métallique selon l'une des revendications 1 à 10, **caractérisé en ce que** chaque partie d'extrémité en forme de dôme (3) comprend une pluralité de secteurs angulaires (30,32,34) amoviblement fixés les uns aux autres par des moyens de fixation (31,33) en définissant une ouverture polaire (4).

12. Mandrin métallique selon la revendication 11, **caractérisé en ce que** chaque partie d'extrémité en forme de dôme (3) comprend en outre un premier secteur angulaire (32) formant clé de fermeture de la partie formant dôme (3) amoviblement fixé par des moyens de fixation (33) entre un secteur angulaire adjacent (30) et un second secteur angulaire (34) formant clé amoviblement fixé par des moyens de fixation (33) à un secteur angulaire adjacent (30), le second secteur angulaire formant clé (34) pouvant être retiré en premier radialement vers l'intérieur de la partie d'extrémité en forme de dôme (3) lors du démontage des secteurs angulaires (30,32) de la partie en forme de dôme (3).

13. Mandrin métallique selon la revendication 11 ou 12, **caractérisé en ce que** chaque secteur angulaire (30,32,34) comprend deux parois latérales radiales (35) raccordées l'une à l'autre d'une part par une partie dorsale constituée d'une paroi arquée (36) et d'une paroi plane (37) perpendiculaire à l'axe longitudinal (X-X') de la partie cylindrique (2), laquelle paroi plane (37) est raccordée à une paroi interne arquée (38) définissant avec les autres parois internes arquées (38) des autres secteurs angulaires (30,32,34) l'ouverture polaire (4), et d'autre part par une paroi plane frontale et arquée (39) amoviblement fixée en bout correspondant de la partie cylindrique (2).

14. Mandrin métallique selon la revendication 13 considérée en combinaison avec la revendication 12, **caractérisé en ce que** les parois latérales radiales (35) de deux secteurs angulaires adjacents (30) hormis celles des premier et second secteurs formant clés (32,34) comprennent d'une part respectivement un tenon rectiligne (41) et une mortaise conjuguée (42) dans laquelle est engagé le tenon rectiligne (41) qui s'étend obliquement vers l'axe longitudinal (X-X') de la partie cylindrique (2) à partir des parois frontales juxtaposées (39) des deux secteurs angulaires (30) et d'autre part respectivement un tenon rectiligne radial (43) et une mortaise radiale conjuguée (44) dans laquelle est engagé le tenon rectiligne radial (43).

15. Mandrin métallique selon la revendication 14, **caractérisé en ce que** les moyens de fixation de deux secteurs angulaires adjacents (30) comprennent deux boulons (31) traversant les deux parois latérales radiales juxtaposées (35) de ces deux secteurs.

16. Mandrin métallique selon la revendication 15, **caractérisé en ce que** les deux boulons (31) traversent le tenon (41) et la mortaise (42) des deux parois latérales radiales juxtaposées (35) des deux secteurs angulaires adjacents (30).

17. Mandrin métallique selon l'une des revendications 13 à 16, **caractérisé en ce que** les moyens de fixation du premier secteur angulaire formant clé (32) à son secteur angulaire adjacent (30) et au second secteur angulaire formant clé (34) et du second secteur angulaire formant clé (34) à son secteur adjacent (30) comprennent deux boulons (33) à vis à tiges tronconiques (33a) et extrémités filetées **( )**traversant deux paires de perçages tronconiques coaxiaux (50,51) de deux parois latérales radiales adjacentes (35) de deux, adjacents, de ces secteurs, la tige tronconique (33a) de la vis de chaque boulon de fixation (33) étant bloquée dans les deux perçages tronconiques (50,51) par un écrou (33c) vissé à l'extrémité filetée de cette tige et en appui sur la face correspondante de l'une des parois latérales radiales (35) des secteurs adjacents.

18. Mandrin métallique selon l'une des revendications 13 à 17, **caractérisé en ce que** la paroi frontale annulaire (39) définie par les secteurs angulaires (30,32,34) fixés les uns aux autres de chaque partie d'extrémité en forme de dôme (3) est amoviblement fixée à la face externe annulaire (23a) de la paroi annulaire en bout correspondante (23) de la partie cylindrique (2) par des boulons (40) à vis à tiges tronconiques (40a) et extrémités filetées, chaque boulon (40) ayant sa tige tronconique (40a) traversant deux perçages tronconiques coaxiaux (53,54) des deux parois annulaires (39,23), laquelle tige tronconique (40a) est bloquée dans ces deux perçages par un écrou (40c) vissé à l'extrémité filetée de la tige (40a) et en appui sur la face interne de la paroi annulaire en bout (23) de la partie cylindrique (2).

## Patentansprüche

1. Abnehmbarer hohler Metalldorn (1) für die Wicklung einer Verbundkapazität, wie der Behälter eines Pulverantriebs einer Rakete, **dadurch gekennzeichnet, dass** der Dorn (1) drei miteinander verbundene, abnehmbare Teile (2, 3) umfasst, und zwar einen zylindrischen Teil (2) und zwei kuppelförmige Endteile (3) mit einer Drehsymmetrie um die Längsachse (X-X') des zylindrischen Teils (2), der eine Mehrzahl länglicher, rechteckiger und gebogener Segmente (6) umfasst, die mit Hilfe von Zapfen (7), die über die Länge einer Längsseite jedes länglichen Segments (6) verteilt sind und jeweils in über die Länge der benachbarten Längsseite eines benachbarten Segments (6) verteilte Zapfenlöcher (9) eingreifen, nebeneinandergereiht sind, und dadurch, dass die länglichen Segmente (6) durch abnehmbare Befestigungsmittel (11), die die Zapfen (7) in den jeweiligen Zapfenlöchern (9) eingespannt halten, in der nebeneinandergereihten Anordnung gehalten werden.

2. Metalldorn nach Anspruch 1, **dadurch gekennzeichnet, dass** der zylindrische Teil (2) ferner einen langgestreckten Sturz (14) umfasst, der mit Befestigungsmitteln (16) zwischen zwei jeweils benachbarten Längsseiten von zwei benachbarten länglichen Segmenten (6) abnehmbar befestigt ist, die keine Zapfen-Zapfenloch-Konstruktion (7, 9) aufweisen und als Schlüssel zum Schließen des zylindrischen Teils (2) fungieren, wobei der Sturz, der den Schließschlüssel (14) bildet, nach der Abnahme seiner Befestigungsmittel (16) beim Abbau des zylindrischen Teils (2) im Inneren des zylindrischen Teils (2) radial entnommen werden kann.

3. Metalldorn nach Anspruch 1 oder 2, **dadurch gekennzeichnet, dass** jede Längsseite eines länglichen Segments (6) aus einer radial innen liegenden Wand (8, 10) besteht, die sich entlang der Längskante des länglichen Segments (6) erstreckt, und die Zapfen (7) oder die Zapfenlöcher (9) auf der Außenfläche der entsprechenden radial innen liegenden Wand (8, 10) eines länglichen Segments (6) ausgebildet sind.

4. Metalldorn nach Anspruch 2 oder 3, **dadurch gekennzeichnet, dass** die benachbarten Längsseiten ohne Zapfen-Zapfenloch-Konstruktion (7, 9) von zwei jeweils benachbarten länglichen Segmenten (6), zwischen denen der Sturz, der den Schließschlüssel (14) bildet, befestigt ist, jeweils aus einer radial innen liegenden Wand (15) bestehen, die sich entlang der Längskante des entsprechenden länglichen Segments (6) erstreckt.

5. Metalldorn nach Anspruch 4, **dadurch gekennzeichnet, dass** der Sturz, der den Schließschlüssel (14) bildet, zwei Seitenwände (17) umfasst, von denen zwei äußere Seitenflächen (17a) geneigt sind und sich hin zum Inneren des zylindrischen Teils (2) ausweiten und durch die Befestigungsmittel (16) auf den zwei geneigten, zusammenwirkenden Außenflächen (15a) der zwei radial innen liegenden Wände (15) der zwei länglichen Segmente (6) in Anlage gehalten werden.

6. Metalldorn nach Anspruch 4 oder 5, **dadurch gekennzeichnet, dass** die Befestigungsmittel des Sturzes, der den Schließschlüssel (14) zwischen zwei benachbarten länglichen Segmenten (6) bildet, mindestens zwei Bolzenpaare (16) mit Schrauben (18) mit kegelstumpfförmigen Schaften und Endgewinde (19) umfassen, die angrenzend an die zwei Enden des Sturzes, der den Schließschlüssel (14) bildet, angeordnet sind, und die zwei Bolzen (16) eines Paares koaxial angeordnet sind, wobei der kegelstumpfförmige Schaft (18) jedes Befestigungsbolzens (16) zwei koaxiale kegelstumpfförmige Löcher (15b, 17b) einer radial innen liegenden Wand (15) des entsprechenden länglichen Segments (6) und der benachbarten Seitenwand (17) des Sturzes, der den Schließschlüssel (14) bildet, durchquert, wobei der kegelstumpfförmige Schaft (18) der Bolzenschraube (16) in den beiden kegelstumpfförmigen Löchern (15b, 17b) durch eine Mutter (20) festgehalten wird, die mit dem Endgewinde (19) des Schafts im Inneren des Sturzes, der den Schließschlüssel (14) bildet, verschraubt ist.

7. Metalldorn nach einem der Ansprüche 3 bis 6, **dadurch gekennzeichnet, dass** die abnehmbaren Befestigungsmittel, die die Zapfen (7) in ihren jeweiligen Zapfenlöchern (9) festhalten, Bolzen (11) umfassen, die die benachbarten radial innen liegenden Wände (8, 10) von zwei benachbarten länglichen Segmenten (6) und einige der Zapfen (7) und Zapfenlöcher (9) dieser Wände senkrecht durchqueren.

8. Metalldorn nach einem der Ansprüche 1 bis 7, **dadurch gekennzeichnet, dass** jeder Zapfen (7) Querschnitte auf der zur Längsseite jedes länglichen Segments (6) die Form eines gleichschenkligen Trapezes aufweist.

9. Metalldorn nach einem der Ansprüche 1 bis 8, **dadurch gekennzeichnet, dass** zwei benachbarte längliche Segmente (6) in der Nähe ihrer Enden Mittel (21, 22) umfassen, die es ermöglichen, die beiden länglichen Segmente (6) bei der Montage der Zapfen (7) eines der länglichen Segmente (6) in den jeweiligen Zapfenlöchern (9) des anderen länglichen Segments (6) relativ zueinander derart zu positionieren, dass die Endseiten (23a) der beiden länglichen Segmente (6) koplanar sind.

10. Metalldorn nach Anspruch 9, **dadurch gekennzeichnet, dass** die Positioniermittel in der Nähe jedes der beiden Enden der zwei benachbarten länglichen Segmente (6) umfasst: einen geradlinigen Zahn (21) mit geneigten Flanken, der sich quer zur Längsseite eines Segments (6) erstreckt, und eine geradlinige Kerbe (22), die sich quer zur Längsseite des anderen Segments (6) und entsprechend auch zum geradlinigen Zahn (21) derart erstreckt, dass der geradlinige Zahn (21) bei der Montage der Zapfen (7) in ihren jeweiligen Zapfenlöchern (9) der beiden länglichen Segmente (6) in die geradlinige Kerbe (22) eingreifen kann.

11. Metalldorn nach einem der Ansprüche 1 bis 10, **dadurch gekennzeichnet, dass** jedes kuppelförmige Endteil (3) eine Mehrzahl gewinkelter Bereiche (30, 32, 34) umfasst, die durch Befestigungsmittel (31, 33) abnehmbar miteinander fixiert sind und so eine polare Öffnung (4) definieren.

12. Metalldorn nach Anspruch 11, **dadurch gekennzeichnet, dass** jeder kuppelförmige Endteil (3) ferner einen ersten gewinkelten Bereich (32) umfasst, der einen Schließschlüssel des kuppelförmigen Teils (3) bildet, der durch Befestigungsmittel (33) zwischen einem benachbarten gewinkelten Bereich (30) und einem zweiten gewinkelten Bereich (34), der einen Schließschlüssel bildet und durch Befestigungsmittel (33) abnehmbar an einem benachbarten gewinkelten Bereich (30) fixiert ist, wobei der zweite gewinkelte Bereich (34), der eine Schließschlüssel bildet, beim Abbau der gewinkelten Bereiche (30, 32) des kuppelförmigen Teils (3) zunächst radial hin zum Inneren des kuppelförmigen Endteils (3) entnommen werden kann.

13. Metalldorn nach Anspruch 11 oder 12, **dadurch gekennzeichnet, dass** jeder gewinkelte Bereich (30, 32, 34) zwei radiale Seitenwände (35) umfasst, die miteinander verbunden sind, einerseits durch ein aus einer gebogenen Wand (36) und einer senkrecht zur Längsachse (X-X') des zylindrischen Teils (2) angeordneten ebenen Wand (37) bestehendes Rückenteil, wobei die flache Wand (37) mit einer gebogenen Innenwand (38) verbunden ist, die mit den anderen gebogenen Innenwänden (38) der anderen gewinkelte Bereiche (30, 32, 34) die polaren Öffnung (4) definieren, und andererseits durch eine ebene und gebogene Vorderwand (39), die am entsprechenden Endbereich des zylindrischen Teils (2) abnehmbar befestigt ist.

14. Metalldorn nach Anspruch 13 in Verbindung mit Anspruch 12, **dadurch gekennzeichnet, dass** die radialen Seitenwände (35) von zwei benachbarten gewinkelten Bereichen (30), ausgenommen die ersten und zweiten Bereiche, die Schlüssel (32, 34) bilden) jeweils einerseits einen geradlinigen Zapfen (41) und ein entsprechendes Zapfenloch (42), in das der geradlinige Zapfen (41) eingreift, der sich von den frontalen nebeneinandergestellten Vorderwänden (39) der beiden gewinkelten Bereiche (30) schräg hin zur Längsachse (X-X') des zylindrischen Teils (2) erstreckt, und andererseits jeweils einen geradlinigen radialen Zapfen (43) und ein entsprechendes radiales Zapfenloch (44), in das der geradlinige radiale Zapfen (43) eingreift, umfassen.

15. Metalldorn nach Anspruch 14, **dadurch gekennzeichnet, dass** die Befestigungsmittel von zwei benachbarten gewinkelten Bereichen (30) zwei Bolzen (31) umfassen, die die beiden nebeneinandergestellten radialen Seitenwände (35) der beiden Bereiche durchqueren.

16. Metalldorn nach Anspruch 15, **dadurch gekennzeichnet, dass** die beiden Bolzen (31) den Zapfen (41) und das Zapfenloch (42) von den beiden nebeneinandergestellten radialen Seitenwänden (35) der beiden benachbarten gewinkelten Bereiche (30) durchqueren.

17. Metalldorn nach einem der Ansprüche 13 bis 16, **dadurch gekennzeichnet, dass** die Mittel zur Bestigung des ersten gewinkelten Bereichs (32), der einen Schlüssel (32) bildet an seinem benachbarten gewinkelten Bereich (30) und an dem zweiten gewinkelten Bereich (34), der einen Schlüssel bildet, und des zweiten gewinkelten Bereichs (30), der einen Schlüssel bildet an seinem benachbarten Bereich (30), zwei Schraubenbolzen (33) mit kegelstumpfförmigen Schäften (33a) und Endgewinde, die zwei Paare von koaxialen kegelstumpfförmigen Löchern (50, 51) von zwei benachbarten radialen Seitenwänden (35) von zwei benachbarten dieser Bereiche durchqueren, wobei der kegelstumpfförmige Schaft (33a) der Schraube jedes Bolzens (33) in den beiden kegelstumpfförmigen Löchern (50,51) durch eine Mutter (33c) festgehalten wird, die mit dem Endgewinde des Schafts verschraubt ist, und in Anlage an der entsprechenden Fläche einer der radialen Seitenwände (35) der benachbarten Bereiche gehalten wird.

18. Metallhorn nach einem der Ansprüche 13 bis 17, **dadurch gekennzeichnet, dass** die ringförmige Vorderwand (39), die definiert wird durch die gewinkelten Bereiche (30, 32, 34), die in jedem kuppelförmigen Endteil (3) miteinander befestigt sind, an der ringförmigen Außenfläche (23a) der entsprechenden ringförmigen Endwand (23) des zylindrischen Teils (2) durch Schraubenbolzen (40) mit kegelstumpfförmigen Schaften (40a) und Endgewinde abnehmbar befestigt ist, wobei der kegelstumpfförmige Schaft (40a) jedes Boltens (40) zwei koaxiale kegelstumpfförmige Löcher (53, 54) der zwei ringförmigen Wände (39, 23) durchquert, wobei der kegelstumpfförmige Schaft (40a) durch eine mit dem Endgewinde des Schafts (40a) verschraubte Mutter (40c) festgehalten wird und in Anlage an der Innenfläche der ringförmigen Endwand (23) des zylindrischen Teils (2) gehalten wird.

## Claims

1. Dismountable hollow metal mandrel (1) for winding of a composite container, such as a solid propellant reservoir of a rocket, **characterized in that** the mandrel (1) comprises three interconnected and dismountable parts (2, 3), respectively a cylindrical portion (2) and two domed end portions (3) having a symmetry of revolution about the longitudinal axis (X-X') of the cylindrical portion (2) which comprises a plurality of elongated, rectangular and arcuate segments (6), assembled to each other side by side by means of tenons (7) distributed along a longitudinal side of each elongated segment (6) and respectively engaging in mortises (9) distributed along the adjacent longitudinal side of a neighboring segment (6), and **in that** the elongated segments (6) are held together side by side by detachable fastening means (11) which clamp the tenons (7) in their respective mortises (9).

2. Metal mandrel according to claim 1, **characterized in that** the cylindrical portion (2) also comprises an elongated lintel (14) removably fixed by fastening means (16) between two adjacent longitudinal sides respectively of two adjacent elongated segments (6) not comprising tenon (7) and mortise (9) assemblies, and serving as a key for closing the cylindrical part (2), wherein the lintel (14) forming the closing key is radially extractable inside the cylindrical part (2) after removal of its fastening means (16) during disassembly of the cylindrical portion (2).

3. Metal mandrel according to claim 1 or 2, **characterized in that** each longitudinal side of an elongated segment (6) comprises a radially inner wall (8, 10) extending along the longitudinal edge of the elongated segment (6), while the tenons (7) or the mortises (9) are formed on the outer face of the corresponding radially inner wall (8, 10) of an elongated segment (6).

4. Metal mandrel according to claim 2 or 3, **characterized in that** the adjacent longitudinal sides having no tenon (7) and mortise (9) assembly, respectively of the two neighboring elongated segments (6), between which is fixed the lintel (14) forming the closing key, each comprise a radially inner wall (15) extending along the longitudinal edge of the corresponding elongated segment (6).

5. Metal mandrel according to claim 4, **characterized in that** the lintel (14) forming the closing key has two lateral walls (17) whose two lateral outer faces (17a) are inclined and flare inwards towards the cylindrical part (2) and which are held in abutment by the fastening means (16) respectively on the two inclined and conjugate outer faces (15a) of the two radially inner walls (15) of the two elongated segments (6).

6. Metal mandrel according to claim 4 or 5, **characterized in that** the fastening means of the lintel (14) forming the closure key between the two adjacent elongated segments (6), comprise at least two pairs of threaded bolts (16) with frustoconical stems (18) and threaded ends (19), arranged in the vicinity of both ends of the lintel (14) forming the closure key, wherein the two bolts (16) of the same pair are arranged coaxially, wherein the frustoconical stem (18) of each fastening bolt (16) passes through two coaxial frustoconical bores (15b, 17b) of a radially inner wall (15) of the corresponding elongated segment (6) and the adjacent side wall (17) of the lintel (14) forming the closure key, the frustoconical stem (18) of the screw of the bolt (16) is locked in the two frustoconical bores (15b, 17b) by a nut (20) screwed onto the threaded end (19) of this stem inside the lintel (14) forming the closure key.

7. Metal mandrel according to one of the claims 3 to 6, **characterized in that** the removable fastening means clamping the tenons (7) in their respective mortises (9) comprise bolts (11) traversing perpendicularly-adjacent radially inner walls (8, 10) of two neighboring elongated segments (6) and some of the tenons (7) and mortises (9) of these walls.

8. Metal mandrel according to one of claims 1 to 7, **characterized in that** each tenon (7) has an isosceles trapezium shaped cross-section on the longitudinal side of each elongated segment (6).

9. Metal mandrel according to one of the claims 1 to 8, **characterized in that** two neighboring elongated segments (6) comprise means (21, 22) in the vicinity of their ends, for positioning one elongated segment (6) longitudinally with respect to the other of the two, when assembling the tenons (7) of one of the elongated segments (6) respectively in the mortises (9) of the other elongated segment (6) so that the end faces (23a) of the two elongated segments (6) are coplanar.

10. Metal mandrel according to claim 9, **characterized in that** the positioning means comprise in the vicinity of each of the two ends of the two neighboring elongated segments (6), a rectilinear tooth with inclined flanks (21) and extending transversely to the longitudinal side of a segment (6) and a rectilinear notch (22) extending transversely to the longitudinal side of the other segment (6) and with a shape conjugate to the rectilinear tooth (21) so that the rectilinear tooth (21) may engage in the rectilinear notch (22) during the assembly of the tenons (7) in their respective mortises (9) of the two elongated segments (6).

11. Metal mandrel according to one of the claims 1 to 10, **characterized in that** each dome-shaped end portion (3) comprises a plurality of angular sectors (30, 32, 34) that are removably fastened to one another by fastening means (31,33) defining a polar opening (4).

12. Metal mandrel according to claim 11, **characterized in that** each dome-shaped end portion (3) further comprises a first angular sector (32) forming a closing key of the dome portion (3) that is removably fastened by fastening means (33) between an adjacent angular sector (30) and a second key sector (34) removably secured by fastening means (33) to an adjacent angular sector (30), wherein the key (34) forming the second angular sector may be removed first radially towards the end portion in the form of a dome (3) when disassembling the angular sectors (30, 32) of the end portion in the form of a dome (3).

13. Metal mandrel according to claim 11 or 12, **characterized in that** each angular sector (30, 32, 34) comprises two radial side walls (35) connected to one another, on the one hand, by a dorsal portion comprising an arcuate wall (36) and a planar wall (37) perpendicular to the longitudinal axis (X-X') of the cylindrical portion (2), wherein the planar wall (37) is connected to an arcuate inner wall (38) defining the polar opening (4) with the other arcuate inner walls (38) of the other angular sectors (30, 32, 34), and, on the other hand, by a front and arcuate planar wall (39) removably fastened to the corresponding end of the cylindrical portion (2).

14. Metal mandrel according to claim 13 in combination with claim 12, **characterized in that** the radial side walls (35) of two adjacent angular sectors (30), except those of the first and second key sectors (32, 34), respectively comprise, on the one hand, a rectilinear tenon (41) and a conjugate mortise (42) in which the rectilinear tenon (41) engages, and which extends obliquely towards the longitudinal axis (X-X') of the cylindrical part (2) from the juxtaposed front walls (39) of the two angular sectors (30), and respectively, on the other hand, a radial rectilinear tenon (43) and a conjugate radial mortise (44) in which the radial rectilinear tenon (43) engages.

15. Metal mandrel according to claim 14, **characterized in that** the means for fastening two adjacent angular sectors (30) comprise two bolts (31) passing through the two juxtaposed radial side walls (35) of these two sectors.

16. Metal mandrel according to claim 15, **characterized in that** the two bolts (31) pass through the tenon (41) and the mortise (42) of the two juxtaposed radial side walls (35) of the two adjacent angular sectors (30).

17. Metal mandrel according to one of the claims 13 to 16, **characterized in that** the means for fastening the first key angular sector (32) to its adjacent angular sector (30) and to the second angular sector forming the key (34), and the second angular sector forming the key (34) to its adjacent sector (30), comprise two bolts (33) with frustoconical stems (33a) and threaded ends passing through two pairs of coaxial frustoconical bores (50, 51) of two adjacent radial side walls (35), of two adjacent ones of these sectors, wherein the frustoconical stem (33a) of the screw of each fixing bolt (33) is locked in the two frustoconical bores (50, 51) by a nut (33c) that is screwed onto the threaded end of this stem and abuts against the corresponding face of one of the radial side walls (35) of the adjacent sectors.

18. Metal mandrel according to one of the claims 13 to 17, **characterized in that** the annular front wall (39) defined by the angular sectors (30, 32, 34) fastened to each other at each end portion in the form of a dome (3) is removably attached to the annular outer face (23a) of the corresponding annular end wall (23) of the cylindrical portion (2) by bolts (40) with frustoconical stems (40a) and threaded ends, wherein the frustoconical stem (40a) of each bolt (40) passes through two coaxial frustoconical bores (53,54) of the two annular walls (39,23), wherein the frustoconical stem (40a) is locked in these two bores by a nut (40c) screwed onto the threaded end of the stem (40a) and abuts against the inner face of the annular end wall (23) of the cylindrical portion (2).
